# EUROPÄISCHE PATENTSCHRIFT

(11) **EP 4 091 884 B1**
(45) Veröffentlichungstag und Bekanntmachung des Hinweises auf die Patenterteilung: **10.09.2025**
(21) Anmeldenummer: 22174475.8
(22) Anmeldetag: 20.05.2022
(51) Int. Cl.: B60R 13/08

(54) **ABSCHIRMBAUTEIL**
SHIELDING COMPONENT
COMPOSANT DE BLINDAGE

(30) Priorität: 20.05.2021 DE 202021102770 U
(43) Veröffentlichungstag der Anmeldung: 23.11.2022
(73) Patentinhaber: REINZ-Dichtungs-GmbH, 89233 Neu-Ulm (DE)
(72) Erfinder: OSTERMEIER, Helmut, 89233 Neu-Ulm (DE); SPECHT, Christoph, 89233 Neu-Ulm (DE)
(74) Vertreter: Pfenning, Meinig & Partner mbB

(56) Entgegenhaltungen:
- WO-A1-2017/116617
- DE-U1- 202013 006 767

## Beschreibung

Die vorliegende Erfindung betrifft ein Abschirmbauteil, beispielsweise ein Hitzeschild oder Schallabsorber, die zum Abschirmen eines Gegenstandes gegen Hitze und/oder Schall dienen.

Derartige Abschirmbauteile weisen typischerweise mindestens eine metallische Lage auf. Es sind auch Abschirmbauteile bekannt, die mehrere Lagen aufweisen, beispielsweise die zwischen zwei benachbarten metallischen Lagen eine weitere Absorberlage einschließen. Die äußeren metallischen Lagen können an ihren Umfangsrändern miteinander verbunden, beispielsweise verbördelt sein. Derartige Abschirmbauteile werden üblicherweise an einem Gegenstand befestigt, indem sie an diesem Gegenstand festgeschraubt werden. Die Befestigung am Gegenstand erfolgt dabei üblicherweise an mindestens zwei Anbindepunkten, um das Abschirmbauteil möglichst sicher und schwingungsfrei an dem Gegenstand zu befestigen.

Derartige Abschirmbauteile werden insbesondere eingesetzt, um andere Bauteile gegenüber der Wärme- oder Schallemission eines Gegenstandes abzuschirmen. Besonders häufig werden sie im Automobilbau zur Abschirmung beispielsweise von Abgaskrümmern, Katalysatoren oder anderen heißen oder und/oder lauten Bauteilen eingesetzt.

Bei Erwärmung dehnen sich die Lagen eines Abschirmbauteils aus, so dass es im Verlauf zu einem Ausdehnen und Zusammenziehen des Abschirmbauteils und folglich zu einer seitlichen Relativbewegung des Abschirmbauteils auf dem Gegenstand, an dem das Abschirmbauteil befestigt ist, kommt. Andererseits sind herkömmlicherweise die Anbindepunkte des Abschirmbauteils an dem Gegenstand starr. Bei Bewegung des Abschirmbauteils wird also das Abschirmbauteil und insbesondere jede seiner Lagen unter Deformationsstress gesetzt. Insbesondere am Anbindepunkt eines Abschirmbauteils können daher Deformationen im Zuge der Erwärmung und Abkühlung des Abschirmbauteils, insbesondere Beschädigungen wie beispielsweise Risse auftreten.

Als eine herkömmliche Lösung werden nun bei Abschirmbauteilen die Anbindepunkte, d. h. die Durchgangsöffnungen durch das Abschirmbauteil zur Aufnahme eines Befestigungsmittels wie beispielsweise einer Schraube als Langloch ausgeführt. Ein derartiges Langloch lässt einen Versatz des Abschirmbauteils gegenüber dem Gegenstand in beide Richtungen zu. Problematisch hieran ist, dass eine derartige Ausgleichsbewegung beim Ausdehnen und Zusammenziehen des Abschirmbauteils eine definierte Anzugskraft der Befestigungsschraube erfordert, die es ermöglicht, dass das Abschirmbauteil sich relativ zum Gegenstand bewegt. Allerdings bedeutet dies auch, dass das Abschirmbauteil bei der Montage an jeder seiner Anbindepunkte gegenüber dem Gegenstand nur relativ lose befestigt werden müsste. Ein stärkeres Anzugsmoment der Befestigungsschrauben würde zwar zu einem festen Sitz des Abschirmbauteils führen, kann jedoch zu einem Bruch des Abschirmbauteils aufgrund der vorbeschriebenen Beschädigungen führen. Ein Langloch als sekundäres Schraubenloch bietet Ausgleich von Toleranzen lediglich bei der Montage, da im montierten Zustand kein "Durchrutschen" als Ausgleich zu thermischen Spannungen möglich ist. Dieses Durchrutschen bei thermischer Ausdehnung wird normalerweise durch einen sogenannten Schiebesitz, z.B. eine verschiebliche Hülse, ermöglicht. Dieser hat jedoch den Nachteil, dass er nicht im Langloch positionsgenau verbaut werden kann.

Bei Abschirmbauteilen nach dem Stand der Technik wird daher auch häufig als Mittellage eine Lage aus Pappe eingesetzt. Es hat sich gezeigt, dass eine derartige Mittellage das Abschirmbauteil vor einem Bruch schützen kann. Allerdings ist damit die Auswahl des Materials der Mittellage beschränkt. Die WO2017/116617A1 offenbart ein Abschirmbauteil nach dem Oberbegriff von Anspruch 1.

Ausgehend von diesem Stand der Technik macht es sich folglich die vorliegende Erfindung zur Aufgabe, ein Abschirmbauteil zur Verfügung zu stellen, bei dem eine präzise und zugleich stabile Positionierung des Abschirmbauteils auf einem Gegenstand möglich ist und andererseits das Auftreten von Deformationsstress beim Ausdehnen oder Zusammenziehen des Hitzeschildes aufgrund von Erwärmung/Abkühlung nicht oder nur in geringem, insbesondere zu vernachlässigendem Maße auftritt.

Diese Aufgabe wird durch das Abschirmbauteil nach Anspruch 1 gelöst. Vorteilhafte Weiterbildungen des erfindungsgemäßen Abschirmbauteils werden in den abhängigen Ansprüchen gegeben.

Das erfindungsgemäße Abschirmbauteil weist mindestens eine metallische Lage auf. Es ist jedoch möglich, dass das Abschirmbauteil auch mehrere Lagen, insbesondere mehrere metallische Lagen und auch gegebenenfalls weitere nichtmetallische Lagen aufweist. Eine typische Konstellation für ein Abschirmbauteil weist zwei äußere metallische Lagen auf, die an ihren Umfangsrändern miteinander verbördelt oder anderweitig verbunden sind, und zwischen sich eine Dämmlage, beispielsweise eine Glimmerlage, eine Faserlage, eine Papplage oder dergleichen einschließen.

Zumindest in der ersten metallischen Lage als erster Lage ist mindestens eine erste Durchgangsöffnung angeordnet, die der Durchführung eines Befestigungsmittels dient. Bei einem mehrlagigen Abschirmbauteil erstreckt sich die Durchgangsöffnung durch sämtliche Lagen, wobei die Kontur der Durchgangsöffnung nicht in jeder Lage identisch sein muss, jedoch sein kann. Die erste metallische Lage und ggfls. auch die weiteren Lagen können auch weitere Durchgangsöffnungen für Befestigungsmittel aufweisen, die identisch, gleich, ähnlich oder auch unähnlich zu der ersten Durchgangsöffnung ausgebildet sein können.

Die erste Durchgangsöffnung ist erfindungsgemäß nun als frei geformte Öffnung ausgestaltet, indem sie an ihrem Umfangsrand mindestens einen Vorsprung aufweist, so dass die Durchgangsöffnung an diesem Vorsprung zwischen den gegenüberliegenden Seiten des Umfangsrandes der Durchgangsöffnung verjüngt ist, d. h. der Abstand der gegenüberliegenden Seiten des Umfangsrandes dieser ersten Durchgangsöffnung im Bereich des Vorsprungs geringer ist als der Abstand zwischen den gegenüberliegenden Bereichen des Umfangsrandes dieser ersten Durchgangsöffnung benachbart zu dem Vorsprung.

Mit anderen Worten ist die erste Durchgangsöffnung, zumindest in der ersten metallischen Lage derart als Formloch ausgestaltet, dass sie eine Verjüngung bzw. Einschnürung aufweist, d. h. das Formloch an mindestens einer Stelle eingeschnürt ist.

Eine derartige Verjüngung kann selbstverständlich auch erreicht werden, indem an gegenüberliegenden Abschnitten des Umfangsrandes der ersten Durchgangsöffnung jeweils ein Vorsprung vorgesehen ist, wobei der Abstand zwischen den gegenüberliegenden beiden Vorsprüngen geringer ist als der Abstand benachbarter Bereiche des Umfangsrandes der ersten Durchgangsöffnung, die ebenfalls einander zu einer Seite der beiden Vorsprünge gegenüberliegen.

Die erfindungsgemäßen Vorsprünge, beispielsweise Nasen und als solche auch im Folgenden gegebenenfalls bezeichnet, können insbesondere dadurch in der ersten metallischen Lage hergestellt werden, dass die erste metallische Lage am Umfangsrand der ersten Durchgangsöffnung im Bereich dieser Nasen in die Durchgangsöffnung verprägt wird. Sie können auch hergestellt werden, indem eine entsprechende Freiform des Formloches einschließlich des Vorsprungs/der Vorsprünge unmittelbar aus der metallischen Lage bei der Herstellung der ersten metallischen Lage des Abschirmbauteils gestanzt wird. Weitere Herstellungsweisen sind ebenfalls möglich.

Vorteilhafterweise kann über die Wahl der Länge der Vorsprünge und/oder Breite der Vorsprünge und/oder der Lagendicke zumindest im Bereich der Vorsprünge und beispielsweise durch Einbringung weiterer Materialausnehmungen (Löcher) im Bereich der Vorsprünge das elastische und plastische Verhalten der Vorsprünge geeignet eingestellt werden. Durch die Vorsprünge wird die Durchgangsöffnung um 10% bis 20% verengt, vorteilhafterweise um 12% bis 15% verengt.

Das Abschirmbauteil ermöglicht es nun, das Abschirmbauteil bei der Montage an einem Gegenstand in einer festgelegten Position zu montieren. Hierzu wird ein Befestigungsmittel durch einen ersten, zur einen Seite der Vorsprünge liegenden Durchgangsbereich der ersten Durchgangsöffnung durchgeführt. Dieser erste Durchgangsbereich der ersten Durchgangsöffnung kann dabei wie herkömmliche Befestigungslöcher derart ausgestaltet sein, dass das Befestigungsmittel, beispielsweise eine Schraube, ein Niet oder dergleichen, in diesem Durchgangsbereich in der Lagenebene der ersten Lage mit nur geringem Spiel festgelegt ist. Damit ist die Montageposition eindeutig und exakt festgelegt und so die Montage des Abschirmbauteils leicht und präzise möglich. Diese positionsgenaue Montage ermöglicht eine Sicherung hoher Qualitätsstandards bei der Fertigung und Montage.

Zugleich ist es möglich, dass das Abschirmbauteil sich bei Auftreten von hinreichend hohen Kräften, insbesondere bei einer Ausdehnung des Abschirmbauteils oder des Gegenstands aufgrund einer Erwärmung, verschiebt. Dies führt dazu, dass das Befestigungsmittel auf den oder die Vorsprünge drückt und diese gegebenenfalls plastisch verformt. Das Befestigungsmittel kann sich so innerhalb der ersten Durchgangsöffnung in Richtung des zweiten Durchgangsbereiches verschieben. Dies ist durch das in der Ebene der ersten Lage verschiebliche Aufnahmeelement für das Befestigungsmittel möglich, insbesondere wenn in der ersten Durchgangsöffnung ein Schiebesitz angeordnet ist, durch den das Befestigungsmittel durchgeführt wird. Dies kann beispielsweise eine zweiteilige Hülse sein,
deren beide Teile unterschiedlich auskragen und miteinander verfügt, beispielsweise verpresst, werden und die sich bei den auftretenden hohen Kräften wie beschrieben verschieben läßt.

Mit anderen Worten ist nach der Montage des Abschirmelementes an einem Gegenstand auch noch eine spätere Bewegung der Lagen des Abschirmbauteils möglich. Die Kraft, die hierfür erforderlich ist, kann wie oben beschrieben über die plastischen und elastischen Eigenschaften des Vorsprungs bzw. der Vorsprünge, beispielsweise ihrer Steifigkeit, eingestellt werden.

Durch die Ausgestaltung der Verengung in Form eines Vorsprungs oder ggfls. mehrerer Vorsprünge und damit einer Einschnürung der ersten Durchgangsöffnung ist es möglich, dass der Vorsprung oder die Vorsprünge durch das Befestigungsmittel plastisch verformt und das Material des Vorsprungs zumindest teilweise in den dem Befestigungsmittel abgewandten zweiten Durchgangsbereich der ersten Durchgangsöffnung verdrängt wird. Damit wird vermieden, dass die erste metallische Lage oder ggf. auch die weiteren Lagen des Abschirmbauteils bei Ausdehnung des Abschirmbauteils auch außerhalb des Vorsprungs / der Vorsprünge deformiert wird, wodurch zugleich eine Beschädigung des Abschirmbauteils vermieden wird. Damit steigt die Zuverlässigkeit und die Lebensdauer des Abschirmbauteils.

Der zweite Durchgangsbereich, der dem ersten Durchgangsbereich von dem Vorsprung aus gesehen gegenüberliegt, dient folglich als Verdrängungsraum für das Material des Vorsprungs oder der Vorsprünge. Bei geeigneter Ausgestaltung des Vorsprungs / der Vorsprünge ist es auch möglich, dass bei einem mehrlagigen Abschirmbauteil, beispielsweise bei einem dreilagigen Abschirmbauteil, bei Ausdehnung des Abschirmbauteils das Material des Vorsprungs oder der Vorsprünge zumindest teilweise in die Ebene benachbarter Lagen verdrängt wird.

Wesentlich ist weiterhin, dass durch eine derartige Gestaltung der ersten Durchgangsöffnung das Befestigungsmittel den Vorsprung oder die Vorsprünge lediglich soweit verdrängt, dass das Befestigungsmittel in dem verdrängten Zustand, beispielsweise nach Ausdehnung des Abschirmbauteils mit nur geringem Spiel von dem Umfangsrand der ersten Durchgangsöffnung im Bereich des Vorsprungs oder der Vorsprünge umfasst wird.

Bei der bisherigen Beschreibung der Befestigung des erfindungsgemäßen Abschirmbauteils an einem Gegenstand wurde der Fall erwähnt, dass ein Befestigungsmittel, wie beispielsweise eine Schraube durch die erste Durchgangsöffnung durchgeführt wird und das Abschirmbauteil an dem Gegenstand so festlegt. Erfindungsgemäß weist das Abschirmbauteil in der ersten Durchgangsöffnung zusätzlich ein in der Ebene der ersten Lage verschiebliches Aufnahmeelement für das Befestigungsmittel auf, beispielsweise eine Hülse. Eine derartige Hülse kann ein- oder mehrstückig sein und ermöglicht es, dass das Befestigungselement gemeinsam mit der Hülse innerhalb der ersten Durchgangsöffnung verschieblich ist. Alternativ kann als verschiebliches Aufnahmeelement auch ein System aus Unterlegscheiben vorgesehen sein, die einerseits zwischen Schraubenkopf und Abschirmelement und andererseits zwischen Abschirmelement und Gegenstand angeordnet sein können. Diese Unterlegscheiben können im Bereich der ersten Durchgangsöffnung in die erste Durchgangsöffnung ragen und in gleicher Weise wie eine vorbeschriebene ein- oder mehrteilige Hülle die Verpressung des Abschirmelementes durch das Befestigungsmittel begrenzen. Hierdurch wird die Verschieblichkeit des Befestigungsmittels gemeinsam mit dem Aufnahmeelement in der ersten Durchgangsöffnung bestimmt und die Anforderungen an die Genauigkeit des Verbaus des Abschirmbauteils an dem Gegenstand eingehalten.

Erfindungsgemäß ist es erforderlich, dass auch bei einem mehrteiligen Abschirmbauteil mindestens die erste Lage eine wie oben beschriebene erste Durchgangsöffnung aufweist. Auch die weiteren Lagen müssen entsprechende Durchgangsöffnungen aufweisen, damit eine das gesamte Abschirmbauteil durchgreifende Durchgangsöffnung für ein Befestigungsmittel entsteht. Die weiteren Lagen können zwar gleichgeformte Durchgangsöffnungen aufweisen. Für die Funktion der vorliegenden Erfindung ist es jedoch nicht zwingend erforderlich, dass die Durchgangsöffnungen durch die weiteren Lagen ebenfalls den erfindungsgemäßen Vorsprung oder die erfindungsgemäßen Vorsprünge aufweisen.

Es ist auch möglich, dass ein zusätzlicher Anbindepunkt ein herkömmliches, rundes Durchgangsloch für ein Befestigungsmittel aufweist. Dieser bildet nach der Anbringung des Abschirmbauteils an dem Gegenstand einen Fixpunkt, relativ zu dem das Abschirmelement sich ausdehnen oder schrumpfen kann. In diesem Falle ist es vorteilhaft, wenn die Verbindungsachse zwischen dem ersten und dem zweiten Durchgangsloch auf diesen Fixpunkt hin ausgerichtet ist.

Im Folgenden werden einige Beispiele erfindungsgemäßer Abschirmbauteile gegeben werden. Dabei bezeichnen gleiche oder ähnliche Bezugszeichen gleiche oder ähnliche Elemente, so dass deren Beschreibung gegebenenfalls nicht wiederholt wird. Die nachfolgenden Beispiele zeigen jeweils eine exemplarische Kombination aus zwingenden und optionalen Merkmalen der vorliegenden Erfindung, wobei es jedoch möglich ist, einzelne optionale Merkmale des jeweiligen Beispiels lediglich mit einem oder weiteren optionalen Merkmalen desselben Beispiels oder anderer Beispiele zu kombinieren, ohne dass sämtliche Merkmale des jeweiligen Beispiels in Kombination eingesetzt werden müssen.

Es zeigen
- Fig. 1: ein erfindungsgemäßes Hitzeschild (Abschirmbauteil) im Ausschnitt und in Draufsicht auf einen Anbindepunkt in einer ersten metallischen Lage;
- Fig. 2: ein weiteres erfindungsgemäßes Abschirmbauteil in Schnittdarstellung im Ausschnitt;
- Fig. 3: einen Querschnitt durch ein Aufnahmeelement des Hitzeschildes in Fig. 1A;
- Fig. 4: ein weiteres erfindungsgemäßes Abschirmbauteil in Schnittdarstellung und in Draufsicht im Ausschnitt;
- Fig. 5: ein weiteres erfindungsgemäßes Abschirmbauteil in Schnittdarstellung und in Draufsicht im Ausschnitt;
- Fig. 6: ein erfindungsgemäßes Abschirmbauteil in Einbausituation im Querschnitt und im Ausschnitt;
- Fig. 7: ein weiteres erfindungsgemäßes Abschirmbauteil in Einbausituation im Querschnitt und im Ausschnitt;
- Fig. 8: ein weiteres erfindungsgemäßes Abschirmbauteil in Einbausituation im Querschnitt und im Ausschnitt.
- Fig. 9: ein erfindungsgemäßes Hitzeschild;
- Fig. 10: ein weiteres erfindungsgemäßes Abschirmbauteil in Draufsicht und im Ausschnitt;
- Fig. 11: ein weiteres erfindungsgemäßes Abschirmbauteil in Draufsicht und im Ausschnitt;
- Fig. 12: das Abschirmbauteil der Fig. 1B mit einer vorteilhaften Bemaßung;
- Fig. 13: das Abschirmbauteil der Fig. 1B mit einer weiteren vorteilhaften Bemaßung; und
- Fig. 14: ein weiteres erfindungsgemäßes Abschirmbauteil in Draufsicht und im Ausschnitt.

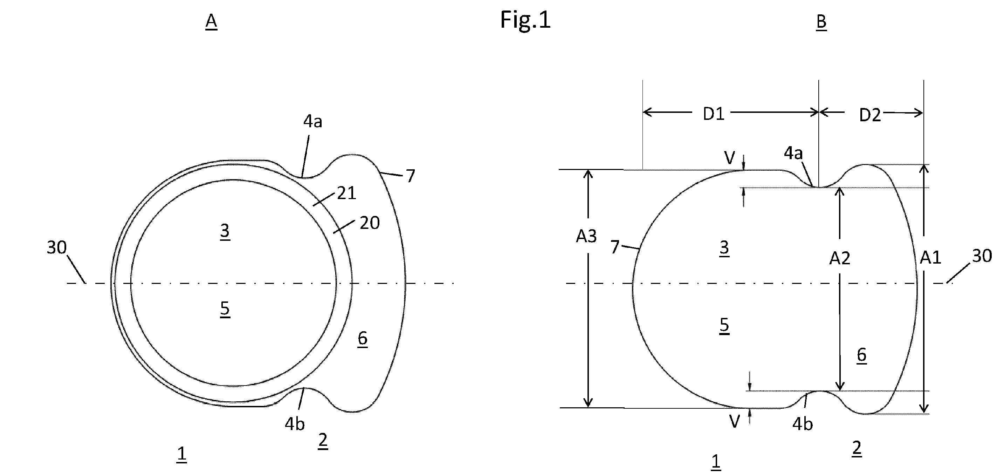

Fig. 1 zeigt in den Teilfiguren 1A und 1B ein einlagiges Hitzeschild 1 als Beispiel eines Abschirmbauteils in Draufsicht und im Ausschnitt um einen Anbindepunkt, an dem das Hitzeschild 1 an einem Gegenstand bzw. Bauteil befestigt werden kann.

In Fig. 1A ist im Ausschnitt eine Draufsicht auf eine erste metallische Lage 2 des Hitzeschildes 1 im Bereich eines Schraubenloches 3 als Anbindepunkt zu sehen. Das Schraubenloch 3 als Durchgangsöffnung weist eine Freiform auf, bei der die Durchgangsöffnung 3 eine längs einer Verbindungsachse 30 längliche Form aufweist. An zwei entlang des Randes 7 der Durchgangsöffnung gegenüberliegenden Abschnitten weist die erste metallische Lage 2 zwei Nasen 4a, 4b auf, die gemeinsam die Durchgangsöffnung 3 verjüngen. Die Durchgangsöffnung 3 weist hierdurch zwei Bereiche auf, einen Durchgangsbereich 5 zur Durchführung eines Befestigungsmittels zu einer Seite der Vorsprünge 4a und 4b und einen Durchgangsbereich 6, der vom Bereich 5 gesehen hinter der durch die Nasen 4a und 4b erzeugten Verjüngung angeordnet ist. Die Durchgangsbereiche 5 und 6 sind nun längs der genannten Verbindungsachse 30 zwischen den Vorsprüngen 4a und 4b miteinander verbunden.

Die Nasen 4a und 4b sind gemeinsam mit der ersten Durchgangsöffnung aus der ersten Lage gestanzt. Es ist jedoch auch möglich zuerst die Durchgangsöffnung 3 als Langloch ohne Nasen in die erste Lage 2 einzubringen und anschließend die Nasen 4a und 4b als Vorsprünge aus der ersten Lage 2 zu prägen. Alternativ können die Nasen 4a und 4b auch durch Anstauchen des Umfangsrandes 7 erzeugt werden oder bereits beim Herstellen der Durchgangsöffnung 3 miterzeugt werden, z.B. indem die Durchgangsöffnung 3 bei der Herstellung der ersten metallischen Lage 2 bereits in geeigneter Form in das metallische Blech der ersten metallischen Lage 2 eingebracht, z.B. gestanzt wird.

Der Durchgangsbereich 5 weist eine derartige Form auf, dass in diesem eine Hülse 21 als Aufnahmelement 20 angeordnet werden kann. Der Innendurchmesser der Hülse 21 ist derart ausgestaltet, dass durch die Hülse 21 ein Befestigungsmittel, beispielsweise eine Schraube, durchgeführt werden kann.

Die Vorsprünge 4a und 4b sind so ausgestaltet, dass die Hülse 21 und der Durchmesser des Durchgangsbereiches 5 in der Durchgangsöffnung 3 so groß sind, dass sie ohne zusätzlichen Kraftaufwand nicht in Richtung des Durchgangsbereiches 6 verschoben werden können. Dadurch, dass die Hülse 21 in der Öffnung 3 im Bereich des Durchgangsbereiches 5 festgelegt ist, ist eine anfängliche sichere und positionsgenaue Befestigung des Hitzeschildes 1, z.B. Anschrauben, an einem Gegenstand möglich.

Im späteren Gebrauch kann das Hitzeschild 1 sich erwärmen oder abkühlen und dadurch ausdehnen oder schrumpfen. Hierdurch ergeben sich Scherkräfte auf das Hitzeschild und seine Lagen, die beispielsweise bei einer Verschiebung der ersten Lage 2 in Fig. 1A in Richtung der Verbindungsachse 30 zwischen dem Bereich 5 und dem Bereich 6 das Hitzeschild 1 mit seiner ersten metallischen Lage 2 in Fig. 1A nach links auf die Hülse drücken. Die metallische Lage 2 kann sich erfindungsgemäß nun in Richtung der Hülse 21 verschieben, wobei das Material der Nasen 4a und 4b von der Hülse 21 in Richtung des Durchgangsbereiches 6 verpreßt wird.

Die vorliegende Erfindung ermöglicht es also, das Hitzeschild 1 anfänglich positionsgenau an einem Gegenstand anzubringen und im späteren Gebrauch dennoch eine Verschieblichkeit des Hitzeschildes 1 gegenüber einem Befestigungsmittel und gegenüber dem Gegenstand längs der Verbindungsachse 30 zu ermöglichen und so Spannungen aus der ersten metallischen Lage 2 und gegebenenfalls dem ganzen Hitzeschild 1 zu nehmen. Hierdurch wird verhindert, dass Risse und Brüche in der ersten metallischen Lage 2 auftreten, die zu einer Zerstörung des Hitzeschildes 1 führen können.

Soweit oben von einer durch Erwärmung bedingten Ausdehnung und Schrumpfung der ersten metallischen Lage 2 und deren relativer Verschieblichkeit zu der Hülse 21 gesprochen wurde, ist es selbstverständlich auch möglich, dass der Gegenstand, an dem das Hitzeschild 1 befestigt ist, beispielsweise bei Erwärmung, eine Bewegung ausführt und so über das Befestigungsmittel und die Hülse 21 sich relativ zur ersten metallischen Lage 2 bewegt.

Fig. 1B zeigt die Dimensionierung der Durchgangsöffnung 3.

Der Abstand A2 zwischen den beiden Vorsprüngen 4a und 4b, ist so gewählt, dass er kleiner ist als der Abstand A3 gegenüberliegender Abschnitte des Randes 7 in einem benachbarten Bereich zu den Vorsprüngen 4a und 4b in den Durchgangsbereichen 5 und/oder 6. Insbesondere entspricht der Abstand A1 weitgehend dem Außendurchmesser der Hülse 21 in Fig. 1A, so dass die Hülse 20 bei der Erstmontage des Hitzeschildes 1 eine vorbestimmte Position aufweist.

Auch der Abstand D1, d.h. der Durchmesser des Durchgangsbereiches 5 längs der Verbindungsachse 30 von einem Punkt zwischen den Vorsprüngen 4a, 4b und dem gegenüberliegenden Umfangsrand 7 des Durchgangsbereiches 5, ist so gewählt, dass die Hülse 21 an ihrer Position festgelegt wird. Die Länge D2 des Durchgangsbereiches 6 in Richtung der Verbindungsachse 30 von einem Punkt zwischen den Vorsprüngen 4a, 4b und dem Umfangsrand 7, d.h. der Durchmesser des Durchgangsbereiches 6 längs der Verbindungsachse 30, kann gering gehalten werden, insbesondere geringer als der Durchmesser D1 des Durchgangsbereiches 5 in der Verbindungsachse 30, da der Durchgangsbereich 6 lediglich einen Ausweichraum für die Hülse 20 bzw. das Befestigungsmittel sowie einen Verdrängungsraum für die Nasen 4a und 4b bildet.

Im Bereich des Durchgangsbereiches 6 ist der Durchmesser A1 des Durchgangsbereiches 6 senkrecht zur Verbindungsachse 30 größer als der Abstand A2 zwischen den beiden Vorsprüngen 4a und 4b. Hierdurch bildet der Durchgangsbereich 6 einen Verdrängungsraum für das Material der Nasen 4a und 4b.

Die Nasen 4a und 4b stehen jeweils um eine Länge V über den Umfangsrand 7 der Durchgangsöffnung 3 benachbart zu den Nasen in die Durchgangsöffnung 3 hinein, so daß ggfls. gilt A1 = A2 + 2V. Dieser Überstand V wird derart gewählt, dass die Hülse 21, wie in Fig. 1A dargestellt, anfänglich an einer gesicherten Position festgelegt ist.

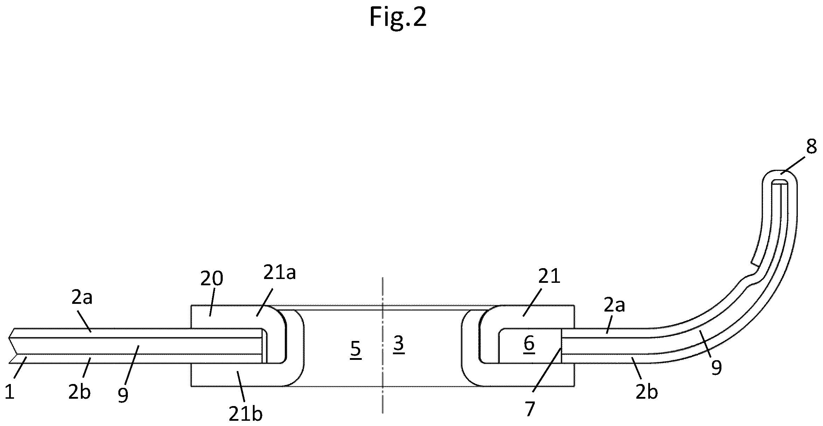

Fig. 2 zeigt einen Querschnitt um den Anbindepunkt eines weiteren Hitzeschildes ähnlich dem Hitzeschild in Fig. 1. Statt eines einlagigen Hitzeschildes ist hier nun ein dreilagiges Hitzeschild 1 dargestellt mit einer ersten metallischen Lage 2a, einer zweiten metallischen Lage 2b und einer zwischen diesen beiden metallischen Lagen 2a und 2b eingeschlossenen dritten Zwischenlage 9. Die metallischen Lagen 2a und 2b sowie die Zwischenlage 9 sind im Bereich der Durchgangsöffnung 3 gleich ausgebildet, so dass alle drei Lagen Nasen 4a und 4b aufweisen.

Die Zwischenlage 9 kann beispielsweise aus Papier, Pappe, Vlies, Glimmer und dergleichen bestehen oder diesen aufweisen. Sie dient der weiteren Verbesserung der Abschirmwirkung des Hitzeschildes 1 bzgl. Wärme und Schall. Im Bereich der Durchgangsöffnung 5 sind die beiden Lagen 2a und 2b identisch ausgebildet, so dass die Beschreibung lediglich der ersten metallischen Lage 2a diesbezüglich genügt. Die Lage 2a ist im Bereich der Durchgangsöffnung 5 derart ausgebildet wie die erste Lage 2 in Fig. 1.

Die beiden Lagen 2a und 2b sind an ihren Rändern mittels eines Falzes 8 der Lage 2b um den Rand der Lage 2a miteinander verbunden und schließen damit die Zwischenlage 9 zwischen sich sicher ein.

Der dargestellte Querschnitt in Fig. 2 ist ein Querschnitt in der Verbindungsachse 30 aus Fig. 1. Die Fig. 2 stellt dabei das Hitzeschild 1 in einem anfänglichen, nicht montierten Zustand dar. Abweichend von Fig. 1 ist die Hülse 21 nunmehr zweiteilig mit einem oberen Hülsenteil 21a und einem unteren Hülsenteil 21b ausgebildet. Die Hülse ist im in Fig. 2 dargestellten Zustand durch die in diesem Querschnitt nicht zu erkennenden Nasen 4a und 4b aus Fig. 1 in dem Durchgangsbereich 5 der Durchgangsöffnung 3 gehalten.

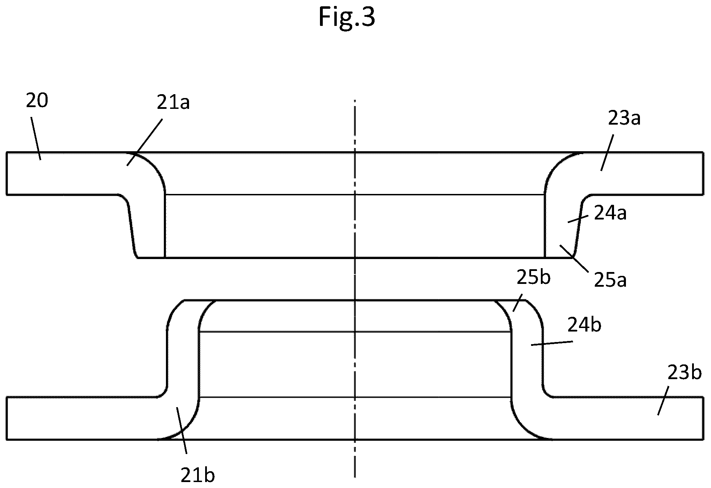

Fig. 3 zeigt die beiden Hülsenteile 21a und 21b des Hitzeschildes 1 in Fig. 2 in einem Zustand, in dem sie noch nicht in die Durchgangsöffnung 3 der Fig. 2 eingebracht sind. Beide Hülsenteile 21a und 21b weisen einen flanschartigen Bereich 23a, 23b sowie einen Hülsenhals 24a bzw. 24b auf. Der Hülsenhals 24a weist dabei einen geringsten Innendurchmesser auf, der größer ist als der größte Außendurchmesser des Hülsenhalses 24b, jeweils gemessen längs einer um den Innenraum des jeweiligen Hülsenhalses 24a, 24b etwas mittig zwischen dem Flansch 23a bzw. 23b und dem Ende 25a bzw. 25b des jeweiligen Hülsenhalses 24a bzw. 24b umlaufenden Linie. Das zweite Hülsenteil 21b ist als Einführhilfe an dem Ende 25b des Hülsenhalses 24b zum Innenvolumen der Hülse hin abgekantet (alternativ: angefast), so dass es bei der Montage in der Durchgangsöffnung 3 leicht in das Hülsenteil 21a eingeführt werden kann. Zur Befestigung der beiden Hülsenteile 21a und 21b miteinander wird das Ende 25b anschließend nach außen umgeformt, so dass es wie in Fig. 2 dargestellt, den Übergang zwischen dem Flansch 23a und dem Hülsenabschnitt 24a übergreift.

Der Abstand zwischen den beiden Flanschen 23a und 23b ist in Fig. 2 derart gewählt, dass die Hülse 21 in der Durchgangsöffnung 3 leicht verschieblich ist und so einen Schiebesitz für ein Befestigungsmittel, beispielsweise eine Schraube bildet. Durch die Wahl des Abstandes zwischen den Flanschen 23a und 23b ist insbesondere eine thermische Ausdehnung oder Verschieblichkeit der Lagen 2a, 2b und 9 gegenüber der Hülse 21 ermöglicht.

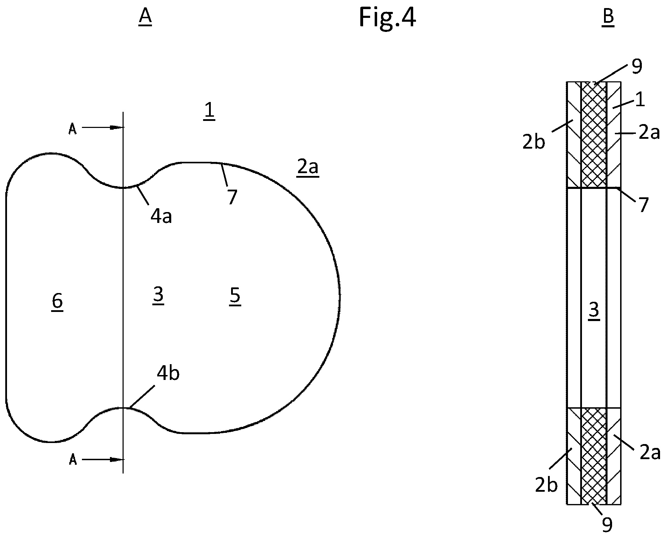

Fig. 4 zeigt eine Draufsicht auf die erste metallische Lage 2a des Hitzeschildes 1 aus den Figuren 2 und 3 in Draufsicht (Fig. 4A) und im Querschnitt (Fig. 4B). Der Querschnitt in Fig. 4B ist ein Querschnitt durch das Hitzeschild 1 längs der Linie A-A in Fig. 4A.

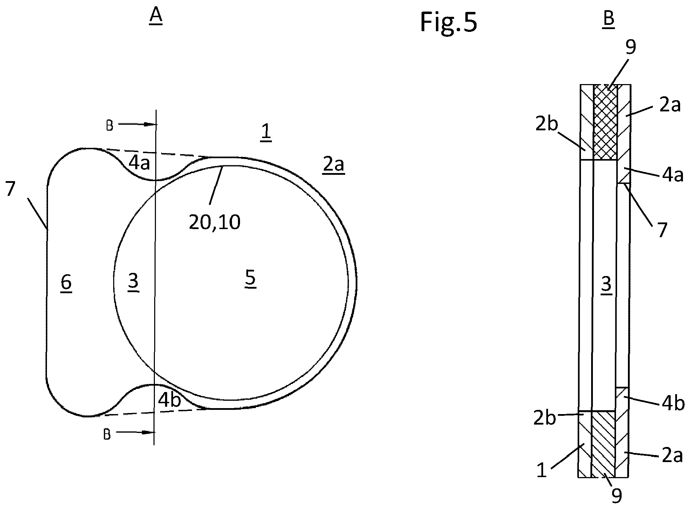

Fig. 5 zeigt ein weiteres Beispiel eines erfindungsgemäßen Hitzeschildes 1. Dieses Hitzeschild 1 ist ähnlich ausgebildet wie dasjenige in Fig. 4 und in gleicher Weise wie in Fig. 4 dargestellt.

Im Unterschied zu dem Hitzeschild in Fig. 4 weist jedoch lediglich die erste Lage 2a die Nasen 4a und 4b auf, während die zweite metallische Lage 2b und die Zwischenlage 9 keine Vorsprünge 4a, 4b aufweisen. Vorsprünge in der ersten metallischen Lage 2a genügen jedoch, um den anfänglichen Sitz eines Aufnahmeelementes 20, wie beispielsweise einer Hülse, oder eines Befestigungsmittels 10, wie beispielsweise einer Schraube, zu gewährleisten.

Die gestrichelte Linie des Randes 7 in Fig. 5A stellt die Kontur der Lagen 2b und 9 dar, während die durchgezogene Linie des Randes 7 der Durchgangsöffnung 3 die Kontur der Durchgangsöffnung 3 in der ersten Lage 2a darstellt.

In Fig. 5A ist weiterhin die Kontur eines Aufnahmeelementes 20 bzw. eines Befestigungsmittels 10 eingezeichnet.

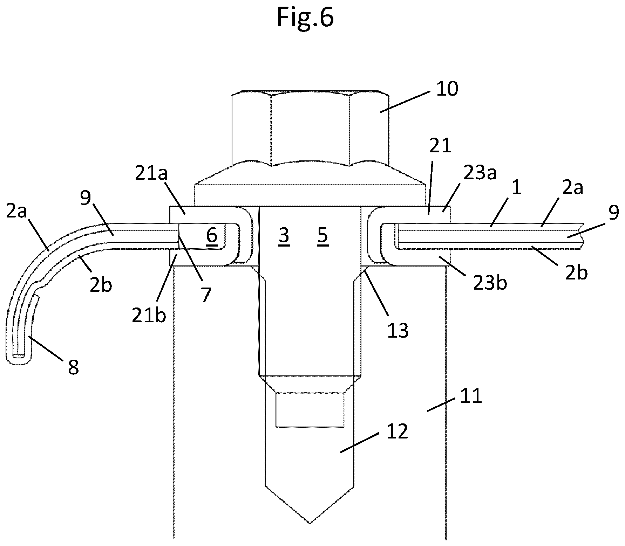

Fig. 6 zeigt ein Hitzeschild 1 wie in Fig. 2 in einer Einbausituation an einem Bauteil bzw. Gegenstand 11 im Querschnitt und im Ausschnitt um einen Anbindepunkt. In Fig. 6 ist das Hitzeschild 1 nach Anbau an Gegenstand 11 dargestellt. Das Bauteil 11, beispielsweise ein Motorblock, weist eine Bohrung 12 auf, die zur Aufnahme einer Gewindeschraube 10 dient. Die Länge der Schraube 10 und der Gewindebohrung 12 ist derart gewählt, dass die Schraube vollständig in die Gewindebohrung 12 eingeführt werden kann, bis sie mit ihrem Schraubenkopf auf der Hülse 21 aufliegt. Um die Schraube 10 in der Gewindebohrung zu zentrieren weist sie zwischen Schraubenkopf und Gewinde als Einführhilfe eine Fase 13 auf. Die weitere Ausgestaltung des Hitzeschildes ist so wie in den Figuren 2 bis 4 dargestellt.

Die Hülse 21 dient hier dazu, dass die Lagen 2a, 2b und 9 des Hitzeschildes 1 innerhalb der Hülse 21 verschieblich sind, wobei die zur Verschiebung erforderliche Kraft durch den Abstand zwischen den Hülsenteilen 21a und 21b sowie die Dicke und Elastizität/Plastizität des Hitzeschildes im Bereich zwischen den Flanschen 23a und 23b eingestellt werden kann.

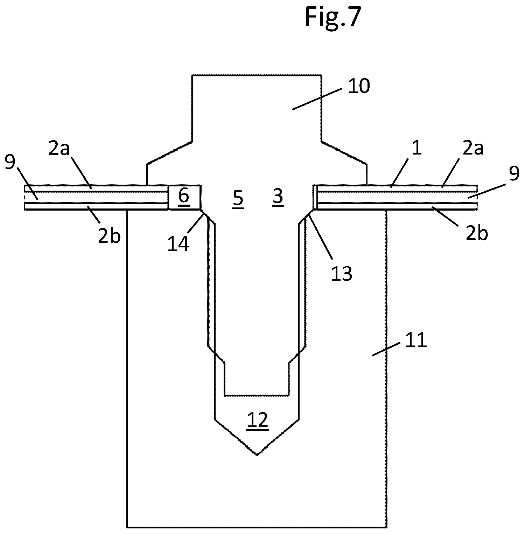

Fig. 7 zeigt ein weiteres Beispiel eines erfindungsgemäßen Abschirmbauteils als Hitzeschild. Dies ist ähnlich demjenigen in Fig. 6. Allerdings weist das Hitzeschild 1 keine Hülse 21 auf. Vielmehr ist die Schraube 10 unmittelbar durch die Durchgangsöffnung 3 geführt und in einer Gewindebohrung 12 des Bauteils 11 verschraubt. Im Unterschied zu Fig. 6 weist nunmehr nicht nur der Übergang vom Schraubenkopf zum Schraubengewinde eine Fase 13 auf, die als Einführungs- und Zentrierhilfe dient, sondern auch der Übergang zwischen der Oberfläche des Bauteils 11, an der die zweite Lage 2b anliegt, zu der Gewindebohrung 12. Die Fase 13 der Schraube 10 und die Fase 14 der Gewindebohrung 12 dienen als Anschlag, um die Versenkung der Schraube 10 in der Gewindebohrung 12 zu begrenzen. Auf diese Weise wird der Abstand zwischen Schraubenkopf und Gegenstand 11 und damit auch die Kraft begrenzt, mit der die Schraube 10 auf das Hitzeschild 1 einwirkt. Bei geeigneter Wahl dieser Kraft wird eine vorbestimmte, definierte Beweglichkeit des Hitzeschildes 1 relativ zur Schraube 10 und Bauteil 11 zugelassen. Auch in diesem Falle ergibt sich ein verschieblicher Sitz der Schraube 10 in der Durchgangsöffnung 3 relativ zu dem Hitzeschild 1.

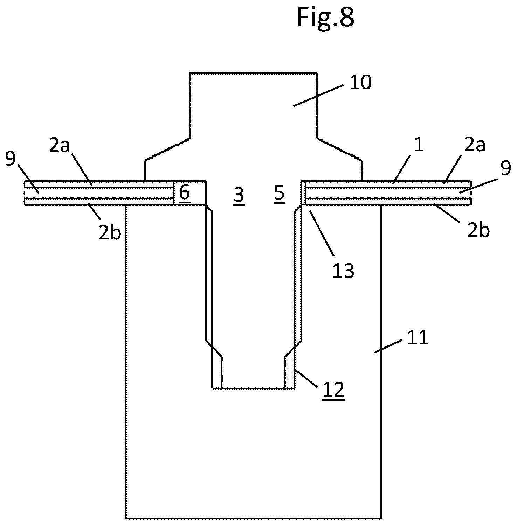

Fig. 8 zeigt ein weiteres Beispiel eines Hitzeschildes 1, das ähnlich demjenigen in Fig. 6 aufgebaut und an einem Bauteil 11 montiert ist. Auch in diesem Beispiel weist lediglich die Bohrung 12 eine Fase 13 auf, die als Einführhilfe und Positionierhilfe dient. Die Schraube 13 weist keine entsprechende Fase auf. Vielmehr ist nun die Länge der Schraube 10 und die Tiefe der Gewindebohrung 12 derart aufeinander abgestimmt, dass der Boden der Gewindebohrung 12 einen Anschlag für die Schraube 10 bildet. Bei geeigneter Dimensionierung von Gewindebohrung 12 und Schraube 10 ist es daher möglich, den Abstand zwischen Schraubenkopf und Bauteil 11 einzustellen und so eine definierte Kraft des Schraubenkopfes der Schraube 10 auf das Hitzeschild 1 einzustellen. Bei geeigneter Wahl der Kraft, die sich aus den Eigenschaften des Hitzeschildes herkömmlich bestimmen lässt, wird so ebenfalls ein verschieblicher Sitz der Schraube 10 in dem Hitzeschild 1 realisiert.

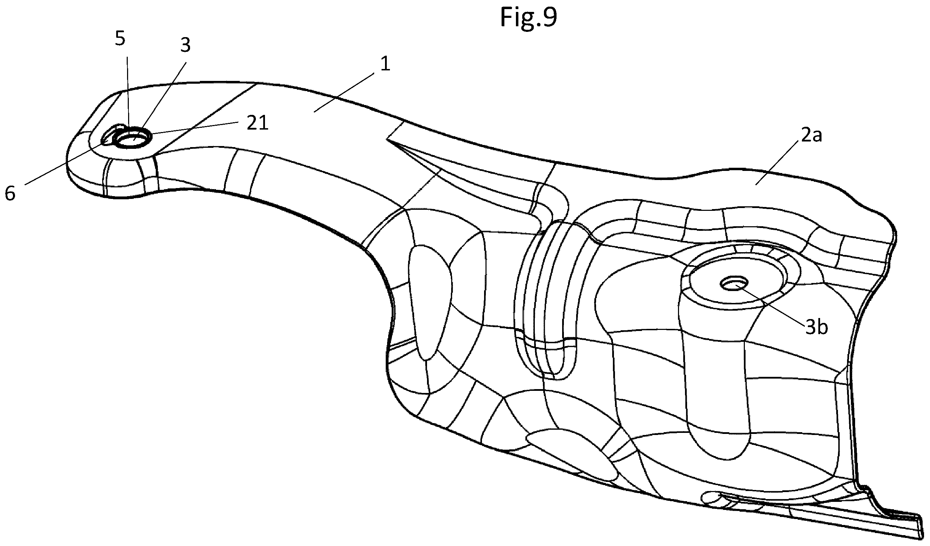

Fig. 9 zeigt ein weiteres erfindungsgemäßes Hitzeschild (Abschirmbauteil) 1.

Dieses Hitzeschild 1 ist in isometrischer Ansicht auf die erste Lage 2a dargestellt. Dieses Hitzeschild 1 ist ein dreilagiges Hitzeschild, dessen Zwischenlage und zweite Lage in dieser Ansicht hinter der ersten Lage 2a nicht zu erkennen sind.

Das Hitzeschild 1 weist in sämtlichen Lagen eine erste Durchgangsöffnung 3 auf, die so wie die in Fig. 1A dargestellte Durchgangsöffnung 3 ausgestaltet ist. In dieser Durchgangsöffnung 3 ist, ebenso wie in Fig. 1A, ein Aufnahmeelement in Form einer Hülse 21 als Teil eines Schiebesitz angeordnet.

Etwa in der Verbindungsachse zwischen den beiden Aufnahmebereichen 5 und 6 der Durchgangsöffnung 3 ist eine weitere, herkömmliche, runde Durchgangsöffnung 3b angeordnet, die keinen Schiebesitz aufweist und die ein in der Durchgangsöffnung 3b befindliches Befestigungsmittel in seiner Position im Wesentlichen festlegt. Mittels der Durchgangsöffnung 3b kann das Hitzeschild 1 an einem Bauteil befestigt werden.

Aufgrund des Schiebesitzes 21 in der Durchgangsöffnung 3 ist das Abschirmbauteil jedoch in der Verbindungsachse zwischen den beiden Durchgangsöffnungen 3 und 3b relativ zu dem Bauteil, an dem das Hitzeschild 1 befestigt ist, beweglich, beispielsweise, wenn sich in diesem Fall das Hitzeschild zusammenzieht oder das Bauteil ausdehnt.

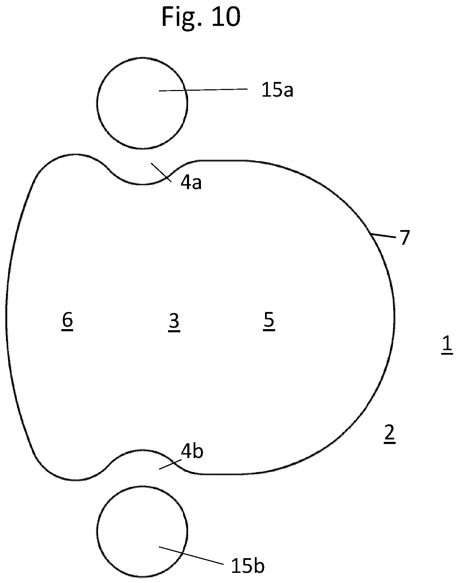

Fig. 10 zeigt ein weiteres Hitzeschild 1 in Draufsicht auf die erste Lage 2 und im Ausschnitt um eine Durchgangsöffnung 3, wie sie auch in Fig. 4 dargestellt ist. Im Unterschied zu Fig. 4 weisen jedoch die Nasen 4a und 4b jeweils Ausnehmungen 15a bzw. 15b auf. Diese Ausnehmungen (Löcher) 15a und 15b ermöglichen, die Elastizität und Plastizität der Nasen 4a und 4b gezielt einzustellen und so die zur Verschiebung eines Befestigungsmittels in der Durchgangsöffnung 3 erforderlichen Kräfte festzulegen.

Die Ausnehmungen 15a und 15b können in den Nasen 4a und 4b oder wie in Fig. 10 dargestellt auch unmittelbar benachbart zu diesen angeordnet sein.

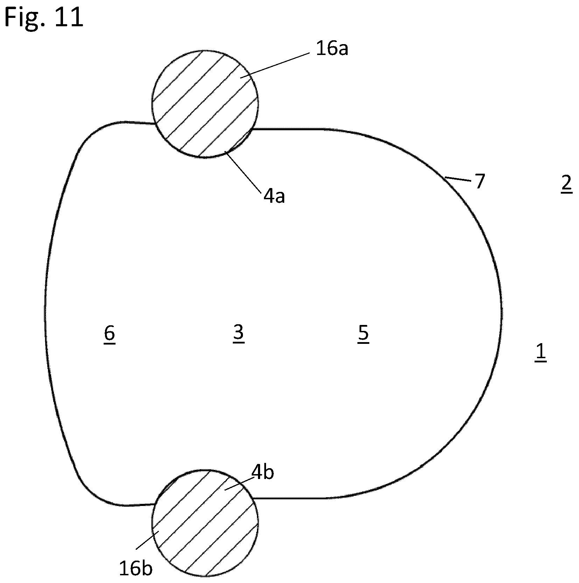

Fig. 11 zeigt ein weiteres Abschirmbauteil 1 in Draufsicht auf die erste Lage 2 und im Ausschnitt um die Durchgangsöffnung 3, das demjenigen in Fig. 4 entspricht. Im Unterschied zur Fig. 4 erfolgt die Herstellung der Nasen 4a und 4b durch Verpressen (bzw. Verprägen) der in Fig. 11 schraffiert gezeichneten Bereiche 16a und 16b, so dass in diesen Bereichen 16a und 16b die Materialstärke der ersten Lage 2 verringert ist.

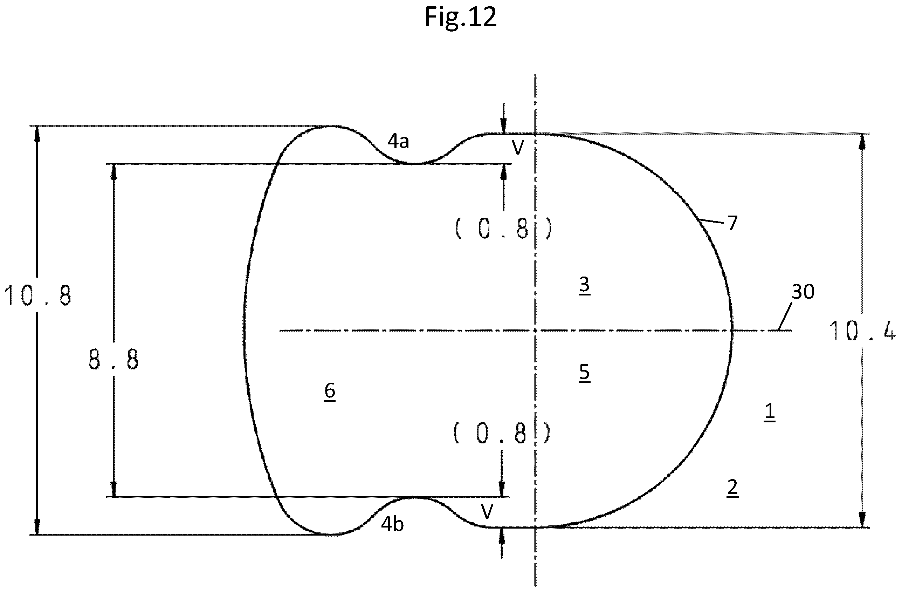

Fig. 12 zeigt ein weiteres Abschirmbauteil 1 im Ausschnitt um die Durchgangsöffnung 3 und in Draufsicht auf die erste Lage 2. Die Ausgestaltung der Durchgangsöffnung 3 entspricht derjenigen in Fig. 4. Abweichend von Fig. 4 sind in Fig. 12 zusätzlich konkrete Bemaßungen in Millimetern angegeben. Aus den hier angegebenen Bemaßungen ergibt sich, dass durch die Nasen 4a und 4b der Durchmesser der Durchgangsöffnung 3 zwischen den Nasen 4a und 4b gegenüber einem benachbarten Bereich zu den Nasen 4a und 4b von beiden Nasen 4a und 4b her um jeweils ca. 7,4 % und damit um insgesamt 14,8 % verringert ist.

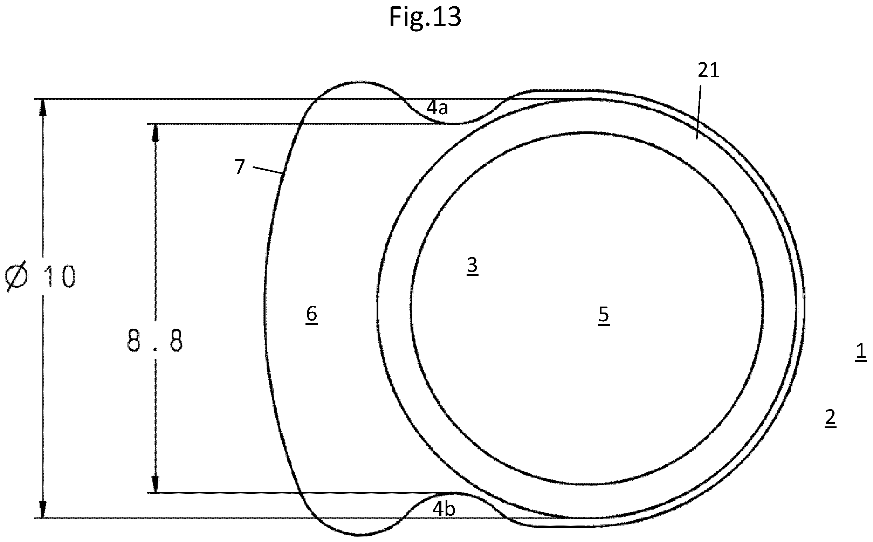

Fig. 13 zeigt das Abschirmbauteil 1 aus Fig. 12 ebenfalls in gleicher Draufsicht auf die erste Lage 2 im Ausschnitt um die Durchgangsöffnung 3. Abweichend von Fig. 4 ist zusätzlich ein in der Durchgangsöffnung 3 angeordnetes Aufnahmeelement 21, beispielsweise eine Hülse als Schiebesitz in dem Durchgangsbereich 5 der Durchgangsöffnung 3 angeordnet. Die Bemaßung dieses Aufnahmeelementes 21 und der Durchgangsöffnung 3 in der Ebene der ersten Lage 2 ist in Fig. 13 angegeben. Aus dieser Bemaßung ergibt sich, dass der Außenumfang des Aufnahmeelementes 21 um 7,4 % geringer ist als der Durchmesser des Durchgangsbereiches 5 und um 13,6 % größer ist als der Durchmesser der Durchgangsöffnung 3 zwischen den beiden Nasen 4a und 4b.

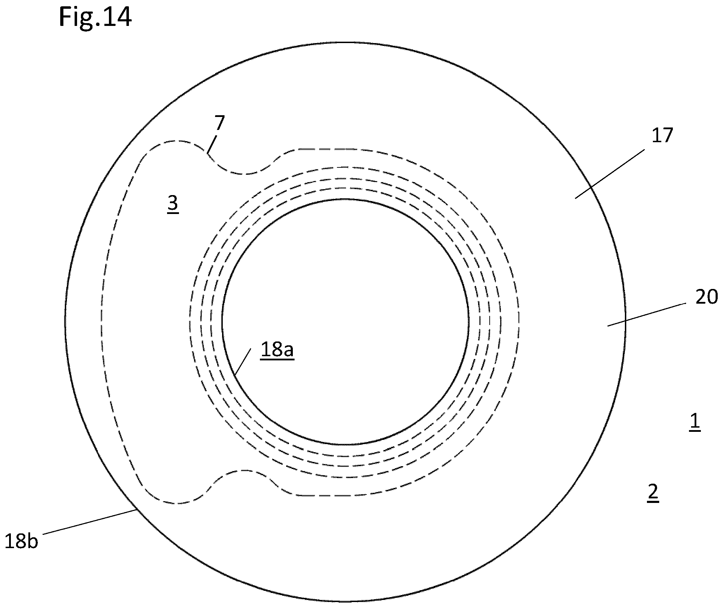

Fig. 14 zeigt ein weiteres Abschirmbauteil 1 in Draufsicht auf die erste Lage 2 und im Ausschnitt um die Durchgangsöffnung 3, die wie diejenige in Fig. 4 ausgebildet ist. Die Durchgangsöffnung 3 ist mit ihrem Außenumfang 7 gestrichelt eingezeichnet. Oberhalb und unterhalb der Durchgangsöffnung 3 befindet sich jeweils eine Scheibe 17, deren Innenumfang 18a und Außenumfang 18b jeweils mit durchgezogenen Linien dargestellt sind. Diese Scheiben 17 können als Aufnahmeelemente für einen verschieblichen Sitz eines durch die Durchgangsöffnung 3 geführten Befestigungsmittels dienen. Benachbart zum Innenumfang 18a als gestrichelte Linie zu sehen ist das Ende des Hülsenhalses 25a.

## Patentansprüche

1. Abschirmbauteil (1), insbesondere Hitzeschild, zum Abschirmen eines Gegenstandes (11) gegen Hitze und/oder Schall, mit mindestens einer metallischen Lage (2),
wobei in der metallischen Lage (2) als erster Lage mindestens eine erste Durchgangsöffnung (3) zur Durchführung eines Befestigungsmittels (10) angeordnet ist, wobei die erste Durchgangsöffnung (3) in mindestens einem Abschnitt ihres Umfangsrandes (7) einen Vorsprung (4) in Richtung der gegenüberliegenden Seite des Umfangsrandes (7) aufweist derart, dass der Abstand (A2) der gegenüberliegenden Seiten der ersten Durchgangsöffnung (3) im Bereich der durch den Vorsprung (4) oder die Vorsprünge (4a, 4b) erzeugten Verengung (4, 4a, 4b) um 10% bis 20 % geringer ist als beidseitig unmittelbar benachbart zu der Verengung (4, 4a, 4b) oder als beidseitig der maximale Durchmesser (A1) der Durchgangsöffnung (3) in jedem der beiden der Verengung (4, 4a, 4b) benachbarten Durchgangsbereiche (5, 6),
wobei die Durchgangsöffnung (3) jeweils einen Durchgangsbereich (5, 6) zu beiden Seiten der durch den Vorsprung (4) erzeugten Verengung aufweist, wobei mindestens einer der Durchgangsbereiche (5) für den Durchgang des Befestigungsmittels (10) ausgebildet ist; **dadurch gekennzeichnet dass** in oder an einem für den Durchgang des Befestigungsmittels (10) ausgebildeten Durchgangsbereich (5) der Durchgangsöffnung (3) ein in der Ebene der ersten Lage (2) verschiebliches Aufnahmeelement (20) für das Befestigungsmittel (10), angeordnet ist.

2. Abschirmbauteil (1) nach dem vorhergehenden Anspruch, **dadurch gekennzeichnet, dass** das verschiebliche Aufnahmeelement (20) eine ein- oder mehrteilige Hülse (21) oder zu beiden Seiten der ersten Lage (2) angeordnete Scheiben ist.

3. Abschirmbauteil (1) nach einem der vorhergehenden Ansprüche, **dadurch gekennzeichnet, dass** die erste Durchgangsöffnung (3) in zwei Abschnitten ihres Umfangsrandes (7) einen Vorsprung (4a, 4b) in Richtung der jeweils gegenüberliegenden Seite des Umfangsrandes (7) aufweist derart, dass der Abstand (A2) der beiden Vorsprünge voneinander geringer ist als zu beiden Seiten der beiden Vorsprünge der Abstand (A1) der gegenüberliegenden Seiten der ersten Durchgangsöffnung (3), wobei die beiden Vorsprünge (4a, 4b) vorteilhafterweise einander gegenüberliegend angeordnet sind.

4. Abschirmbauteil (1) nach einem der vorhergehenden Ansprüche, **dadurch gekennzeichnet, dass** ein für den Durchgang des Befestigungsmittels (10) ausgebildeter Durchgangsbereich (5) oder ggfls. das Aufnahmeelement (20) einen minimalen Durchmesser aufweist, der einen Sitz des Befestigungsmittels (10) in der ersten Lage (2) bzw. in dem Aufnahmeelement (20) ermöglicht.

5. Abschirmbauteil (1) nach einem der vorhergehenden Ansprüche, **dadurch gekennzeichnet, dass** ein einem für den Durchgang des Befestigungsmittels (10) ausgebildeten Durchgangsbereich (5) benachbarter Durchgangsbereich (6) einen Durchmesser in der Verbindungsachse zwischen den beiden Durchgangsbereichen (5, 6) von der Verengung (4, 4a, 4b) bis zu seinem Umfangsrand (7) aufweist, der kleiner ist als der Durchmesser des für den Durchgang des Befestigungsmittels (10) ausgebildeten Durchgangsbereiches (5) in der Verbindungsachse (30) zwischen den beiden Durchgangsbereichen (5, 6) von der Verengung (4, 4a, 4b) bis zu seinem Umfangsrand (7).

6. Abschirmbauteil (1) nach einem der vorhergehenden Ansprüche, **dadurch gekennzeichnet, dass** der Durchmesser (A2) der ersten Durchgangsöffnung (3) an der Verengung (4, 4a, 4b) um 12% bis 15% geringer ist als beidseitig unmittelbar benachbart zu der Verengung (4, 4a, 4b) oder als beidseitig der maximale Durchmesser (A1) der Durchgangsöffnung (3) in jedem der beiden der Verengung (4, 4a, 4b) benachbarten Durchgangsbereiche (5, 6).

7. Abschirmbauteil (1) nach einem der vorhergehenden Ansprüche, **dadurch gekennzeichnet, dass** einer, mehrere oder alle der Vorsprünge (4, 4a, 4b) durch Verpressen/Prägen/Anstauchen des Umfangsrandes (7) der Durchgangsöffnung (3) oder durch Stanzen bei der Herstellung der Durchgangsöffnung (3) hergestellt sind.

8. Abschirmbauteil (1) nach einem der vorhergehenden Ansprüche, **dadurch gekennzeichnet, dass** einer, mehrere oder alle der Vorsprünge (4, 4a, 4b) einen verdünnten Bereich oder ein Loch aufweisen.

9. Abschirmbauteil (1) nach einem der vorhergehenden Ansprüche, **dadurch gekennzeichnet, dass** in der ersten Lage (2) mindestens eine zweite Durchgangsöffnung (3b) zur Durchführung eines Befestigungsmittels (10b), vorteilhafterweise in der Verbindungsachse (30) zwischen zwei Durchgangsbereichen (5, 6) der ersten Durchgangsöffnung (3), angeordnet ist.

10. Abschirmbauteil (1) nach dem vorhergehenden Anspruch, **dadurch gekennzeichnet, dass** die zweite Durchgangsöffnung (3b) in mindestens einem Abschnitt ihres Umfangsrandes (7b) einen Vorsprung (4) in Richtung der gegenüberliegenden Seite des Umfangsrandes (7b) aufweist derart, dass der Abstand der gegenüberliegenden Seiten der zweiten Durchgangsöffnung (3b) im Bereich des Vorsprungs (4c) geringer ist als zu beiden Seiten des Vorsprungs (4c).

11. Abschirmbauteil (1) nach einem der vorhergehenden Ansprüche, **gekennzeichnet durch** mindestens eine weitere Lage (2b), wobei eine, mehrere oder alle der weiteren Lagen (2b) in axialer Richtung einer, mehrerer oder aller Durchgangsöffnungen (3, 3a, 3b) der ersten Lage (2a) eine Durchgangsöffnung (3b) zum Durchgang des Befestigungsmittels (10) und/oder des Aufnahmeelements (20) aufweisen.

12. Abschirmbauteil (1) nach einem der beiden vorhergehenden Ansprüche, **dadurch gekennzeichnet, dass** die zweite Durchgangsöffnung (3b)und/oder die Durchgangsöffnung (3c) in der weiteren Lage (2b) oder allen Lagen (2a, 2b) in mindestens einem Abschnitt ihres Umfangsrandes (7) einen Vorsprung (4) in Richtung der gegenüberliegenden Seite des Umfangsrandes (7) aufweist derart, dass der Abstand (A2) der gegenüberliegenden Seiten der zweiten und/oder weiteren Durchgangsöffnung (3b) im Bereich des Vorsprungs (4) geringer ist als zu beiden Seiten des Vorsprungs (4).

## Claims

1. A shielding component (1), in particular a heat shield, for shielding an object (11) against heat and/or sound, the shielding comopnent having at least one metallic layer (2),
wherein at least one first through-opening (3) for the passage of a fastening means (10) is arranged in the metallic layer (2), as the first layer,
wherein the first through-opening (3), in at least one section of its circumferential edge (7), has a projection (4) in the direction of the opposite side of the circumferential edge (7) such that
the distance (A2) between the opposite sides of the first through-opening (3) in the region of the constriction (4, 4a, 4b) created by the projection (4) or the projections (4a, 4b) is 10% to 20% smaller than on both sides immediately adjacent to the constriction (4, 4a, 4b) or than on both sides of the maximum diameter (A1) of the through-opening (3) in each of the two passage regions (5, 6) adjacent to the constriction (4, 4a, 4b),
wherein the through-opening (3) has a passage region (5, 6) on each side of the constriction created by the projection (4), wherein at least one of the passage regions (5) is designed for the passage of the fastening means (10);
**characterized in that**
a receiving element (20) for the fastening means (10) is arranged in or on a passage region (5) of the through-opening (3) formed for the passage of the fastening means (10), wherein the receiving element (20) is displaceable in the plane of the first layer (2).

2. The shielding component (1) according to the preceding claim, **characterized in that** the displaceable receiving element (20) is a single-part or multi-part sleeve (21) or discs arranged on both sides of the first layer (2).

3. The shielding component (1) according to any one of the preceding claims, **characterized in that** the first through-opening (3) has, in two sections of its circumferential edge (7), a projection (4a, 4b) in the direction of the respective opposite side of the circumferential edge (7)such that the distance (A2) of the two projections from one another is smaller than the distance (A1) between the opposite sides of the first through-opening (3) on both sides of the two projections, wherein the two projections (4a, 4b) are advantageously arranged opposite one another.

4. The shielding component (1) according to one of the preceding claims, **characterized in that** a passage region (5) formed for the passage of the fastening means (10) or, if applicable, the receiving element (20), has a minimum diameter that enables the fastening means (10) to be seated in the first layer (2) or in the receiving element (20).

5. The shielding component (1) according to any one of the preceding claims, **characterized in that** a passage region (6) adjacent to a passage region (5) formed for the passage of the fastening means (10) has a diameter in the connecting axis between the two passage regions (5, 6) from the constriction (4, 4a, 4b) to its circumferential edge (7) that is smaller than the diameter of the passage region (5) formed for the passage of the fastening means (10) in the connecting axis (30) between the two passage regions (5, 6) from the constriction (4, 4a, 4b) to its circumferential edge (7).

6. The shielding component (1) according to any one of the preceding claims, **characterized in that** the diameter (A2) of the first through-opening (3) at the constriction (4, 4a, 4b) is 12% to 15% smaller than the diameter of the first through-opening on both sides immediately adjacent to the constriction (4, 4a, 4b) or than the diameter of the first through-opening on both sides of the maximum diameter (A1) of the first through-opening (3) in each of the two passage regions (5, 6) adjacent to the constriction (4, 4a, 4b).

7. The shielding component (1) according to any one of the preceding claims, **characterized in that** one, several or all of the projections (4, 4a, 4b) are produced by pressing/embossing/compressing the circumferential edge (7) of the through-opening (3) or by punching during the production of the through-opening (3).

8. The shielding component (1) according to any one of the preceding claims, **characterized in that** one, several or all of the projections (4, 4a, 4b) have a thinned region or a hole.

9. The shielding component (1) according to any one of the preceding claims, **characterized in that** at least one second through-opening (3b) for the passage of a fastening means (10b) is arranged in the first layer (2), advantageously in the connecting axis (30) between two passage regions (5, 6) of the first through-opening (3).

10. The shielding component (1) according to the preceding claim, **characterized in that** the second through-opening (3b) has, in at least one section of its circumferential edge (7b), a projection (4) in the direction of the opposite side of the circumferential edge (7b) such that the distance between the opposite sides of the second through-opening (3b) is smaller in the region of the projection (4c) than on either side of the projection (4c).

11. The shielding component (1) according to any one of the preceding claims, **characterized in that** it has at least one further layer (2b), wherein one, several or all of the further layers (2b) have a through-opening (3b) in the axial direction of one, several or all through-openings (3, 3a, 3b) of the first layer (2a) for the passage of the fastening means (10) and/or the receiving element (20).

12. The shielding component (1) according to any one of the two preceding claims, **characterized in that** the second through-opening (3b) and/or the through-opening (3c) in the further layer (2b) or all layers (2a, 2b) has a projection (4) in at least one section of its circumferential edge (7) in the direction of the opposite side of the circumferential edge (7) such that the distance (A2) between the opposite sides of the second and/or further through-opening (3b) in the region of the projection (4) is smaller than the distance between the opposite sides of the second and/or further through-opening (3b) on both sides of the projection (4).

## Revendications

1. Composant de blindage (1), en particulier bouclier thermique, pour protéger un objet (11) contre la chaleur et/ou le son, comprenant au moins une couche métallique (2),
au moins une première ouverture de passage (3) pour le passage d'un moyen de fixation (10) étant disposée dans la couche métallique (2) en tant que première couche,
dans lequel la première ouverture de passage (3) présente, dans au moins une partie de son bord périphérique (7), une saillie (4) en direction du côté opposé du bord périphérique (7), de telle sorte que
la distance (A2) entre les côtés opposés de la première ouverture de passage (3) dans la zone d'un rétrécissement formé par la saillie (4) ou les saillies (4a, 4b) est inférieure de 10 % à 20 % aux deux côtés directement adjacents au rétrécissement (4, 4a, 4b) ou au diamètre maximal (A1) des deux côtés de l'ouverture de passage (3) dans chacune des deux zones de passage (5, 6) voisines du rétrécissement (4, 4a, 4b),
l'ouverture de passage (3) présentant respectivement une zone de passage (5, 6) de part et d'autre du rétrécissement généré par la saillie (4), au moins une des zones de passage (5) étant formée pour le passage du moyen de fixation (10) ;
un élément de réception (20) pour le moyen de fixation (10), déplaçable dans le plan de la première couche (2), étant disposé dans ou sur une zone de passage (5), réalisée pour le passage du moyen de fixation (10), de l'ouverture de passage (3).

2. Composant de blindage (1) selon la revendication précédente, **caractérisé en ce que** l'élément de réception déplaçable (20) est un manchon (21) en une ou plusieurs parties ou des disques disposés de part et d'autre de la première couche (2).

3. Elément de blindage (1) selon l'une quelconque des revendications précédentes, **caractérisé en ce que** la première ouverture de passage (3) présente, dans deux portions de son bord périphérique (7), une saillie (4a, 4b) en direction du côté opposé respectif du bord périphérique (7), de telle sorte que la distance (A2) entre les deux saillies est inférieure ou égale à la distance (A1) entre les deux côtés opposés du bord périphérique (7) de chaque côté des deux saillies (4a, 4b), les deux saillies (4a, 4b) étant avantageusement disposées en face l'une de l'autre.

4. Composant de blindage (1) selon l'une des revendications précédentes, **caractérisé en ce qu'**une zone de passage (5) formée pour le passage du moyen de fixation (10) ou, le cas échéant, l'élément de réception (20) présente un diamètre minimal permettant un logement du moyen de fixation (10) dans la première couche (2) ou dans l'élément de réception (20).

5. Elément de blindage (1) selon l'une des revendications précédentes, **caractérisé en ce qu'**une zone de passage (6) adjacente à une zone de passage (5) formée pour le passage du moyen de fixation (10) présente un diamètre dans l'axe de liaison entre les deux zones de passage (5, 6) du rétrécissement (4, 4a, 4b) à son bord périphérique (7) qui est inférieur au diamètre de la zone de passage (5) formée pour le passage du moyen de fixation (10) dans l'axe de liaison (30) entre les deux zones de passage (5, 6) du rétrécissement (4, 4a, 4b) à son bord périphérique (7).

6. Elément de blindage (1) selon l'une des revendications précédentes, **caractérisé en ce que** le diamètre (A2) de la première ouverture de passage (3) est inférieur de 12% à 15% au diamètre des deux côtés immédiatement à côté du rétrécissement (4, 4a, 4b) ou au diamètre maximal (A1) de l'ouverture de passage (3) dans chacune des deux zones de passage (5, 6) adjacentes au rétrécissement (4, 4a, 4b).

7. Composant de blindage (1) selon l'une quelconque des revendications précédentes, **caractérisé en ce qu'**une, plusieurs ou la totalité des saillies (4, 4a, 4b) sont réalisées par pressage/emboutissage/refoulement du bord périphérique (7) de l'ouverture traversante (3) ou par poinçonnage lors de la fabrication de l'ouverture traversante (3).

8. Composant de blindage (1) selon l'une quelconque des revendications précédentes, **caractérisé en ce qu'**une, plusieurs ou toutes les saillies (4, 4a, 4b) comportent une zone amincie ou un trou.

9. Composant de blindage (1) selon l'une quelconque des revendications précédentes, **caractérisé en ce qu'**au moins une deuxième ouverture de passage (3b) est disposée dans la première couche (2) pour le passage d'un moyen de fixation (10b), avantageusement dans l'axe de liaison (30) entre deux zones de passage (5, 6) de la première ouverture de passage (3).

10. Composant de blindage (1) selon la revendication précédente, **caractérisé en ce que** la deuxième ouverture de passage (3b) présente, dans au moins une partie de son bord périphérique (7b), une saillie (4c) en direction du côté opposé du bord périphérique (7b), de telle sorte que la distance des côtés opposés de la deuxième ouverture de passage (3b) est plus faible dans la zone de la saillie (4c) que des deux côtés de la saillie (4c).

11. Composant de blindage (1) selon l'une des revendications précédentes, **caractérisé par** au moins une autre couche (2b), une, plusieurs ou toutes les autres couches (2b) présentant dans la direction axiale d'une, plusieurs ou toutes les ouvertures de passage (3, 3a, 3b) de la première couche (2a) une ouverture de passage (3b) pour le passage du moyen de fixation (10) et/ou de l'élément de réception (20).

12. Composant de blindage (1) selon l'une des deux revendications précédentes, **caractérisé en ce que** la deuxième ouverture de passage (3b) et/ou l'ouverture de passage (3c) dans l'autre couche (2b) ou dans toutes les couches (2a, 2b) présente dans au moins une partie de son bord périphérique (7) une saillie (4) en direction du côté opposé(3b) d'une telle manière que la distance (A2) des côtés opposés est plus faible dans la zone de la saillie (4) que des deux côtés de la saillie (4).
